## Europäisches Patentamt

## European Patent Office

## Office européen des brevets

(19)

(11) Veröffentlichungsnummer: **0 111 094**
**B1**

(12)

# EUROPÄISCHE PATENTSCHRIFT

(45) Veröffentlichungstag der Patentschrift:
**19.11.87**

(51) Int. Cl.⁴: **F 16 H 13/14, F 16 H 15/22**

(21) Anmeldenummer: **83110103.5**

(22) Anmeldetag: **11.10.83**

(54) **Reibradgetriebe.**

(30) Priorität: **08.12.82 DE 3245402**

(43) Veröffentlichungstag der Anmeldung:
**20.06.84 Patentblatt 84/25**

(45) Bekanntmachung des Hinweises auf die Patenterteilung:
**19.11.87 Patentblatt 87/47**

(84) Benannte Vertragsstaaten:
**CH DE FR GB IT LI SE**

(56) Entgegenhaltungen:
**DE - C - 236 140**
**DE - C - 812 618**
**DE - U - 7 116 754**

**DE-B-p20966 XII/47hD (A. GAUNITZ)**

(73) Patentinhaber: **William Prym-Werke GmbH & Co. KG,
Zweifaller Strasse 130, D-5190 Stolberg/Rhld. (DE)**

(72) Erfinder: **Kopatz, Heinz-Dieter, Peterstrasse 18,
D-5110 Alsdorf (DE)**

(74) Vertreter: **Mentzel, Norbert, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2 (DE)**

ACTORUM AG

## Beschreibung

Die Erfindung bezieht sich auf ein Reibradgetriebe der im Oberbegriff des Anspruches 1 angegebenen Art. Dieses kann eine einzige Friktionsstelle aus einem Kegel- und Reibrad aufweisen, das auf die Abtriebswelle wirkt, oder aber aus einer doppelten Reibrad-Kombination bestehen, die zwei Friktionsstelle gegenüber einem angetriebenen Planrad einerseits und gegenüber einem zur Abtriebswelle führenden Reibrad andererseits besitzt. Jeweils ein Glied dieser Kombination ist zu einem Doppelglied zusammengefasst und wird zur Veränderung des Übertragungsverhältnisses gemeinsam quer zur Getriebeachse bewegt.

Bei den aus der DE-C-812 618 bekannten Reibradgetrieben dieser Art kommt es aufgrund wechselnder Drehmomentabnahme durch den Verbraucher zu einer axialen Bewegung der aneinanderliegenden V-Kurven- und -Gegenkurvenstücken. Die durch Übertragung der Drehbewegung im Getriebe anfallende axiale Kraft kommt durch die aufeinandergleitenden V-Kurven zustande, wenn die Antriebswelle ein Drehmoment abgibt. Änderungen der Drehmomentabgabe, z.B. durch eine verbraucherseitige Unwucht, führen zu einer Veränderung dieser axialen Kraft und damit zu einer gegenseitigen Gleitbewegung der V-Kurven aufeinander. Es kommt zu einer Schwingungsbewegung der ineinandergreifenden Kurvenstücke. Daraus ergibt sich ein Verschleiss an der Berührungsstelle der V-Kurvenstücke, die zu einer Reibungskorrosion führen kann. Ein eingeführtes Schmiermittel zwischen den Kurvenstücken kann diese Gefahr nicht dauerhaft beheben, weil das Schmiermittel durch Zentrifugalkräfte bei der Rotation der Übertragungswelle in den Aussenbereich des Getriebes gedrängt wird und dadurch nicht mehr zur Schmierung im Bereich der V-Kurven zur Verfügung steht. Es sind somit keinerlei Vorkehrungen getroffen worden, um ein Entweichen des Schmiermittels durch die Zentrifugalkraft zu verhindern, obwohl im Bereich der Trennfuge zwischen den beiden radial zur Drehachse verlaufenden Gleitflächen auf die zylindrische äussere Mantelfäche der beiden Teile eine Hülse aufgesetzt ist. Diese Hülse dient jedoch lediglich zur Lagerung der beiden, minimal gegeneinander verdrehbaren Teile bzw. zur Lagerung des einen Teiles und zur Festsetzung des anderen Teiles.

Die DE-C-236 140 offenbart ein Schmieren der radial zur Drehachse verlaufenden Gleitflächen. Die die beiden Teile auseinanderdrückende Feder ist auf der äusseren Mantelfläche der minimal gegeneinander verdrehbaren Teile aufgesetzt und mit einer übergeschobenen Büchse abgedeckt. Die Büchse soll zugleich geeignet sein, einen geschlossenen Öl- oder Fettbehälter für die Zähne zu bilden. Durch die beim bestimmungsgemässen Gebrauch des Reibrollengetriebes auftretende Zentrifugalkraft dürfte das Öl oder das Fett jedoch lediglich nach aussen wandern und nicht nach innen zwischen die Zähne. Der Öl- oder Fettbehälter ist somit an der falschen Stelle angeordnet. Der Erfindung liegt die Aufgabe zugrunde, ein einfaches Getriebe der gattungsgemässen Art zu entwickeln, das sich durch geringen Verschleiss und hohe Lebensdauer auszeichnet, wobei eine dauerhafte Schmierung gewährleistet ist.

Diese Aufgabe wird durch die im Kennzeichen des Anspruches 1 angeführten Mittel erreicht. Das Schmiermittel kann jetzt auch bei Auftreten hoher Zentrifugalkräfte nicht mehr aus dem Innenbereich der Übertragungswelle herausgelangen, sondern wird dort zurückgehalten und bleibt an der entscheidenden Übergangsstelle zwischen den beiden Teilen der Übertragungswelle wirksam, wo die Drehmomente überführt werden. Die Gefahr von Verschleiss und Korrosion im Kernbereich des Getriebes ist dadurch wirkungsvoll verhindert.

Als Dichtungsglied kann in jenem Fall, wo die Welleneingangs- und Ausgangsteile der Übertragungswelle in einem Lagerrohr stecken, aus einer Dichtungshülse bestehen, welche die Übergangszone mit den V-Kurven- und -Gegenkurvenstücken überdeckt. Eine solche Dichtungshülse wird zumindest einseitig mit Innennuten versehen, in welchen Dichtungsringe stecken, die einen optimalen Schutz gegen axiales Austreten des Schmiermittels aus dieser Übergangszone liefern.

Sofern die Dichtungshülse mit dem einen Teil der Übertragungswelle drehfest verbunden ist, ist auch ein Verschleiss der Dichtungshülse selbst verhindert und es findet keine nennenswerte Beanspruchung statt, die sich in einer langen Gebrauchsdauer der Dichtungshülse bemerkbar macht. Für diese drehfeste Verbindung kann ein Gewindestift dienen, der die Wandung der Dichtungshülse durchdringt und an einer radialen Abflachung des einen Teiles der Übertragungswelle angreift.

Die V-Kurvenstücke der zweiteiligen Übertragungswelle können auch im Bereich des Sacklochbodens einer Hohlwelle angeordnet sein, weshalb es in diesem Fall vorteilhaft ist, als Dichtungsglied einen O-Ring zu verwenden, der diesen Sacklochboden-Bereich gegenüber dem das Drehlager aufnehmenden Restbereich der Hohlwelle abdichtet.

Die Übertragungswelle und die sie aufnehmende Hohlwelle sind häufig Bestandteile einer doppelten Reibrad-Kombination, wie sie eingangs erwähnt wurde. Der O-Ring ist ein gängiger Normteil. Eine Abstufung im Sacklochboden schafft eine radiale Anlagefläche für den O-Ring. Durch eine mehrfache axiale Abstufung des Sackloches wird im Endbereich eine als Teil der Übertragungswelle dienende Profilhülse befestigt und der mittlere Axialabschnitt, der noch vor dem O-Ring liegt, als Raum zur Schmiermittelaufnahme verwendet.

Die Erfindung ist in zwei Ausführungsbeispielen in den Zeichnungen dargestellt. Es zeigen:

Fig. 1 einen Teilschnitt eines Reibradgetriebes mit einer Friktionsstelle,

Fig. 2 einen Längsschnitt durch den abtriebsseitigen Bereich des Getriebes von Fig. 1 in dem gegenüber grösserer Darstellung,

Fig. 3 einen Radialschnitt längs der Schnittlinie III-III von Fig. 2,

Fig. 4 und 5 einen Längsschnitt bzw. eine vergrösserte Teilansicht davon durch ein anderes Ausführungsbeispiel der Erfindung, worin ein Reibradgetriebe mit zwei Friktionsstellen gezeigt ist und

Fig. 6 einen Längsschnitt durch ein weiteres Ausführungsbeispiel der Erfindung mit zwei Friktionsstellen.

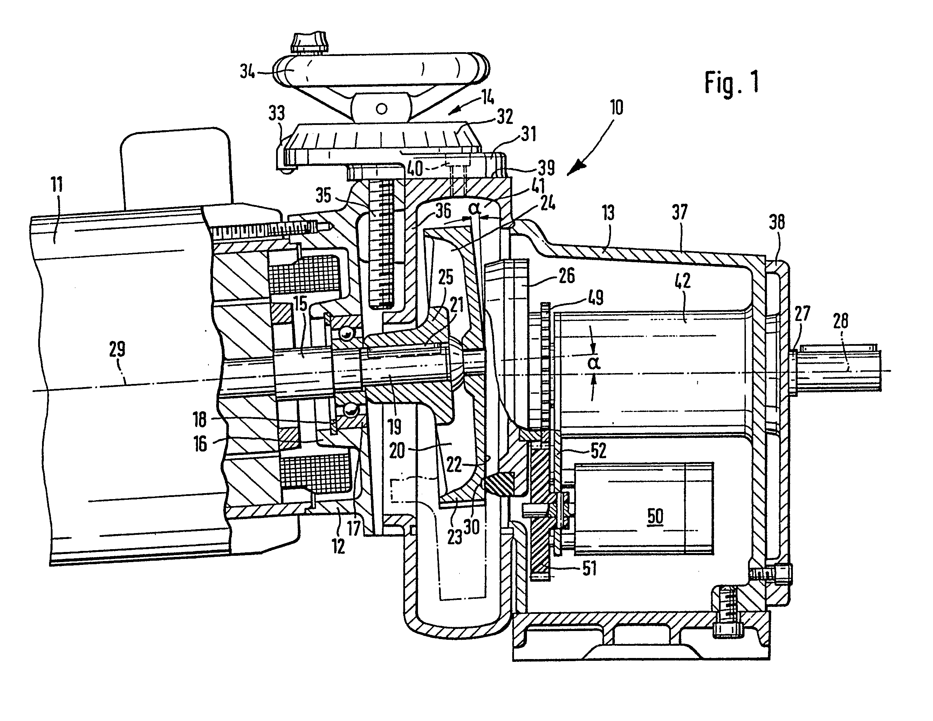

Das in Fig. 1 gezeigte Getriebe 10 besteht aus einem Antriebsmotor 11, der über einen Verstellflansch 12 an einem mehrteiligen Gehäuse 13 befestigt ist. Am Gehäuse 13 sitzt eine Verstelleinrichtung 14.

Der Motor 11 ist mit dem Verstellflansch 12 verschraubt, wobei die Motorwelle 15 in einer konzentrisch angeformten Hülse 16 des Verstellflansches 12 gelagert ist. Zur Lagerung der Welle 15 dient ein Wälzlager 17, das mit einem Sicherungsring 18 gegen axiale Verschiebung in der Hülse 16 gesichert ist. An die Lagerstelle der Motorwelle 15 schliesst sich ein Kupplungszapfen 19 an. Dieser trägt das Kegelrad 20, welches drehfest auf dem Zapfen 19 durch eine Passfeder 21 gehaltert ist. Das Kegelrad 20 ist als eine Tellerscheibe ausgebildet, deren Stirnfläche 22 zum äusseren Umfang hin leicht abfällt. Die Stirnfläche 22 ist durch einen umlaufenden Kragen 23 begrenzt, von dem diametral mehrere Rippen 24 die zentral sitzende Nabe 25 halten. An der Stirnfläche 22 des Kegelrades 20 liegt ein Reibrad 26 an, über welches das von der Motorwelle 15 eingeleitete Drehmoment auf die Abtriebswelle 27 übertragen wird. Das Reibrad 26 und die Abtriebswelle 27 sind in dem mehrteiligen Gehäuse 13 gelagert.

Die Achse 28 des Reibrades 26 und der Abtriebswelle 27 verläuft horizontal, während die Achse 29 der Motorwelle 15 und des Kegelrades 20 eine Neigung aufweist, deren Winkel $\alpha$ die gleiche Grösse hat wie der Neigungswinkel $\alpha$ an der Stirnfläche 22 des Kegelrades 20. Dadurch ist die Stirnfläche 22 des Kegelrades 20 im Berührungsbereich 30 mit dem Reibrad 26 parallel zu diesem gerichtet.

Über die Verstelleinrichtung 14 ist es möglich, das Übersetzungsverhältnis von Motorwelle 15 zur Abtriebswelle 27 stufenlos zu verstellen. Die Verstellung geschieht über eine Vertikalbewegung des Verstellflansches 12 zusammen mit dem Motor 11 und dem Kegelrad 20. Hierdurch verändert sich der Berührungsbereich 30 des Reibrades 26 auf der Stirnfläche 22 des Kegelrades 20. Wird das von der Motorwelle 15 eingeleitete Drehmoment im äusseren Umfangsbereich der Stirnfläche 22 abgenommen – wie in Fig. 1 dargestellt ist – wird ein kleines Übersetzungsverhältnis erzielt, während bei einem mehr radial innen liegenden Drehmomenten-Abgriff das Übersetzungsverhältnis auswächst. Diese entsprechende Lage des Verstellflansches 12 des Kegelrades 20 und des Motors 11 ist in der Fig. 1 strichpunktiert angedeutet.

Wie bereits erwähnt, wird über die Verstelleinrichtung 14 der Verstellflansch 12 vertikal bewegt. Die Verstelleinrichtung 14 ist über eine Befestigungsplatte 31 mit dem mehrteiligen Gehäuse 13, dessen Aufbau noch beschrieben wird, fest verbunden.

Auf der Befestigungsplatte 31 sitzt ein als Stellungsanzeiger dienender Skalenring 32 und ein Zeiger 33. Der Skalenring 32 ist mit einem Handrad 34 und mit einer in den Verstellflansch 12 eingreifenden Transportspindel 35 verbunden. Durch Drehen des Handrades 34 wird der Verstellflansch 12 über die Transportspindel 35 nach unten bewegt, bis das gewünschte Übersetzungsverhältnis eingestellt ist. An der Stellung des Skalenringes 32 bezüglich des Zeigers 33 lässt sich das Übersetzungsverhältnis ablesen.

Das mehrteilige Gehäuse ist aus einer Führung 36 und aus einem durch einen Deckel 38 verschliessbaren Kasten 37 aufgebaut. An der Führung 36 ist der Verstellflansch 12 gehaltert. Zu diesem Zweck ist der Verstellflansch 12 mit einer nicht näher dargestellten, senkrecht verlaufenden Schwalbenschwanznut versehen, in der ein an der Führung 36 angeformter Schwalbenschwanz eingreift. An der Führungsoberseite 39 ist die Befestigungsplatte 31 der Verstelleinrichtung 14 mit Schrauben 40 befestigt. Die Führung 36 nimmt in ihrem Innenraum 41 das Kegelrad 20 auf. An die Führung 36 schliesst sich der Kasten 37 an. Beide Teile sind in nicht näher dargestellter Weise miteinander verschraubt. Der Kasten 37 dient zur Aufnahme des Reibrades 26 und der Abtriebswelle 27 mit ihren Lager- und Übertragungselementen. Er ist als Gussteil ausgebildet und besitzt einen zylinderförmigen Ansatz 42 mit einer durchgehenden Lagerbohrung 43.

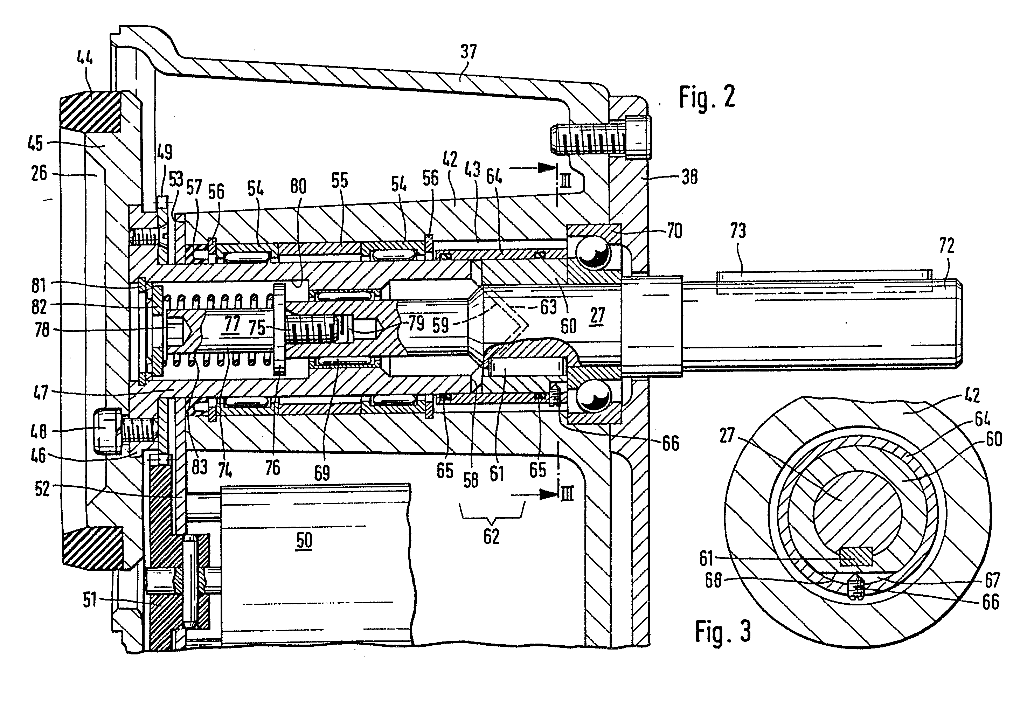

Der detaillierte Aufbau der Abtriebswelle 27 mit ihren Lager- und Übertragungselementen ist in Fig. 2 dargestellt.

Das als Tellerscheibe 45 ausgebildete Reibrad 26 ist mit einem Laufring 44 bestückt, der in der bereits beschriebenen Weise am Kegelrad 20 anliegt. An das Reibrad 26 schliesst sich eine mit einem Bund 46 versehene Hohlwelle 47 an. Diese ist drehfest mit mehreren im Bundbereich angeordneten Schrauben 48 mit dem Reibrad 26 verbunden. Hinter dem Bund 46 der Hohlwelle 47 ist ausserdem ein Stirnrad 49 angeschraubt, welches mit einem an einen Messgenerator 50 gekoppeltes Zahnrad 51 kämmt. Der Messgenerator 50 ist an einer Platte 52 angeflanscht, die am Ende 53 des zylinderförmigen Ansatzes 42 des Kastens 37 gehalten ist.

Die Hohlwelle 47 ist mit zwei Wälzlagern 54, z.B. Nadellagern, zwischen denen eine Distanzhülse 55 liegt, in der Lagerbohrung 43 des zylinderförmigen Ansatzes 42 gelagert. Zur axialen Sicherung der Wälzlager 54 dienen zwei Sicherungsringe 56, die beidseitig an den Wälzlagern 54 liegen. Die Lagerbohrung 43 ist an ihrem freien Ende 53 durch einen Wellendichtring 57 verschlossen, der das Austreten von Schmiermittel verhindert. Das Stirnende 58 der Hohlwelle 47 nimmt über V-förmige Kurven 59 eine V-förmige Gegenkurve 63 aufweisende Profilbüchse 60 mit. Diese ist über eine Passfeder 61 drehfest mit der Abtriebswelle 27 verbunden. Der die V-förmigen Kurven 59, 63 aufweisende Übergangsbereich 62 wird von einer Dichtungshülse 64 überdeckt. Diese ist mit Dichtringen 65, vorzugsweise O-Ringen versehen, die einerends an der Hohlwelle 47 und anderenends an der Profilbüchse 60 anliegen und so den Austritt von Schmiermittel aus dem Übergangsbereich 62 ausschliessen. Die Dichtungshülse 64 ist mit der Profilbüchse 60 drehfest verbunden.

Die Fig. 3 zeigt einen Querschnitt durch diese Verbindung. Die drehfeste Verbindung entsteht aus einem Gewindestift 66, der die Wandung der Dichtungshülse 64 radial durchdringt und in eine Vertiefung 67 einmündet, die durch eine endseitige Abflachung 68 an der Profilbüchse 60 gebildet wird.

Die Fig. 2 zeigt den gestuften Aufbau der Abtriebswelle 27, die bereichsweise von der Hohlwelle 47 aufgenommen wird. Die Abtriebswelle 27 ist mit ihrem einen Ende in der Hohlwelle 47 in einem Nadellager 69 gelagert. Die andere Lagerstelle der Abtriebswelle 27 liegt am Ende der Lagerbohrung 43 des zylinderförmigen Ansatzes 42. Hierfür ist ein Kugellager 70 vorgesehen. Der Kasten 37 ist an dieser Seite durch einen Deckel 38 verschlossen, durch den der eine Passfeder 73 tragende Kupplungszapfen 72 der Abtriebswelle 27 ragt. An das im Inneren der Hohlwelle 47 liegende Ende der Abtriebswelle 27 schliesst sich ein gegliederter Anschlagbolzen 74 an. Dieser ist mit einem Gewindezapfen 75 in einer Gewindebohrung 79 der Abtriebswelle 27 festgelegt. Am freien Ende der Abtriebswelle 27 stützt sich ein Bund 76 ab, an dem sich ein zylindrischer Teil 77 anschliesst. Der Anschlagbolzen 74 weist einen an der Stirnseite des zylindrischen Teils 77 liegenden Innensechskant 78 auf. Dieser hat reine Montagefunktion und dient zur Festlegung eines geeigneten Werkzeuges, wie Inbusschlüssel, um den Anschlagbolzen 74 in die Abtriebswelle 27 einzuschrauben.

An der der Tellerscheibe 45 des Reibrades 26 zugewandten Seite der Hohlwelle 47 weist diese in ihrer Innenbohrung 80 einen Sicherungsring 81 auf, gegen den eine Scheibe 82 anliegt. Diese wird durch eine, sich am Bund 76 des Anschlagbolzens 74 abstützende Druckfeder 83 kraftbelastet. Diese Gestaltung gewährleistet eine von der Drehmomentübertragung unabhängige axiale Anfangskraft zwischen Reibrad 26 und Kegelrad 20. Die eigentliche Axialkraft bei Drehmomentabgabe kommt durch den Schrägverlauf der einander berührenden V-Kurven 59, 63 zustande, die sich dann gegeneinander verschieben. Die Axialkraft wächst mit zunehmender Drehmomentabgabe und führt zu einer weitergehenden Verschiebung der V-Kurven, an denen durch die abgedichtete Hülse 64 stets Schmiermittel ansteht.

Der Kraftschluss bei der Drehmomentübertragung verläuft folgendermassen: Das vom Motor 11 eingeleitete Drehmoment wird über die Motorwelle 15 auf das Kegelrad 20 übertragen. Von der Stirnfläche 22 des Kegelrades 20 erfolgt der Abgriff durch das federbelastete Reibrad 26, das drehfest mit der Hohlwelle 47 verbunden ist. Durch die an ihrem Stirnende 58 vorgesehenen V-förmige Kurven 59 wird über die komplementären Gegenkurven 63 die Profilbüchse 60 mitgenommen. Da die Profilbüchse 60 drehfest auf der Abtriebswelle 27 sitzt, ist damit das Drehmoment auf die Abtriebswelle 27 übertragen worden.

Bei den Ausführungsbeispielen könnte die Anzahl der V-förmigen Kurven 59, 63 vergrössert werden. Auch diese Befestigung der Dichtungshülse 64 kann über mehrere und andere Montagemittel erfolgen.

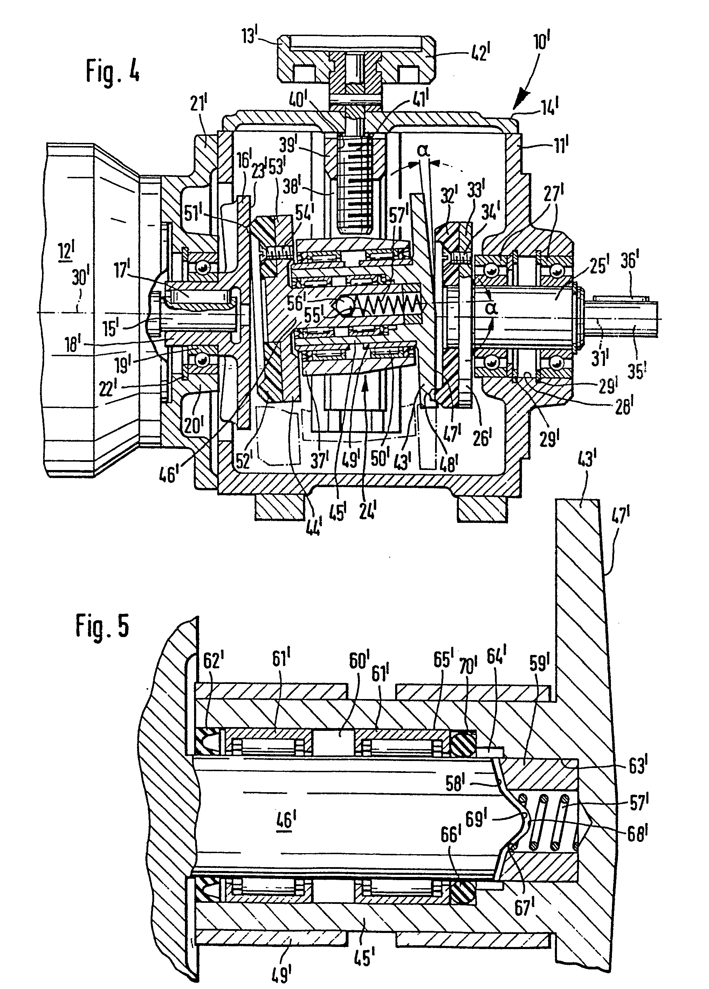

Bei dem in Fig. 4 und 5 gezeigten Getriebe sind die Bezugszeichen mit einem Strich (') versehen. Das dort dargestellte Getriebe 10' mit zwei Friktionsstellen ist aus einem mehrteiligen Gehäuse 11' aufgebaut, an dessen einer Seite ein Flansch 21' mit einem Antriebsmotor 12' liegt und an dessen Oberseite eine Verstelleinrichtung 13' befestigt ist. Der Antriebsmotor 12' treibt über eine Motorwelle 15' ein Planrad 16' an. Dieses ist drehfest über eine Passfeder 17' auf der Motorwelle 15' gehalten. Das Planrad 16' hat einen nach links weisenden zylinderförmigen Ansatz 18', auf dem ein Wälzlager 19' sitzt. Dieses Wälzlager 19' ist in einer zentrischen Hülse 20' des Flansches 21' gelagert, wobei ein Sicherungsring 22' eine axiale Verschiebung des Lagers 19' innerhalb der Hülse 20' ausschliesst.

An der Stirnfläche 23' des Planrades 16' wird das von der Motorwelle 15' eingeleitete Drehmoment über eine Kegel-Reibrad-Kombination 24' – deren Aufbau noch beschrieben wird – auf ein mit der Abtriebswelle 25' drehfest verbundenes Abtriebsrad 26' übertragen. Das Abtriebsrad 26' besteht aus einem ringförmigen Reibbelag 32', der auf einem Scheibenflansch 33' der Abtriebswelle 25' mit Schrauben 34' befestigt ist. Die Abtriebswelle 25' ist in einer Lagerbohrung 28' des Gehäuses 11' gelagert. Zur Lagerung dienen zwei hintereinander angeordnete Wälzlager 27', die zur axialen Sicherung in der Bohrung 28' durch zwei Sicherungsringe 29' festgelegt sind. Die Abtriebswelle 25' endet in einem aus dem Gehäuse 11' ragenden Kupplungszapfen 35', der eine Passfeder 36' trägt.

Die Achse 30' der Motorwelle 15' und die Achse 31' der Abtriebswelle 25' sind horizontal und miteinander fluchtend ausgerichtet.

Die Kegel-Reibrad-Kombination 24' ist in einer geneigt angeformten Hülse 37' eines nach unten offenen Führungsrahmens 38' gelagert. Der Führungsrahmen 38' kann zur Veränderung des Übersetzungsverhältnisses über die Verstelleinrichtung 13' vertikal verstellt werden. Hierzu hat der Führungsrahmen 38' an seinem oberen Steg 39' eine Gewindebohrung 40', die zur Aufnahme einer an der Verstelleinrichtung 13' angebrachten Transportspindel 41' dient. Die Transportspindel 41' ist gegenüber dem Gehäuse 11' axial festgelegt und wird über ein Handrad 42' betätigt. In der Fig. 4 ist die oberste Lage des Führungsrahmens 38' dargestellt. In dieser Stellung wird die kleinstmögliche Übersetzung erzielt. Wird der Führungsrahmen 38' in die strichpunktiert angedeutete Lage gebracht, wird das Übersetzungsverhältnis entsprechend vergrössert. Der Führungsrahmen 38' ist in einer nicht näher dargestellten Schwalbenschwanzführung im Gehäuse 11' vertikal geführt.

Die Kegel-Reibrad-Kombination 24' besteht aus einem in Fig. 4 links angeordneten Reibrad 44' und einem rechts liegenden Kegelrad 43', dessen Stirnfläche 47' zum äusseren Umfang hin leicht abfällt und das eine Hohlwelle 45' aufweist, in welche ein Wellenstumpf 46' des links liegenden Reibrades 44' drehgelagert ist. Die Stirnfläche 47' des Kegelrades 43' dient zur Momentenübertragung auf das Abtriebsrad 26' der Abtriebswelle 25'. Da die Abschrägung der Stirnfläche 47' hierbei einen Winkel $\alpha$ aufweist, der gleich gross ist wie der Winkel $\alpha$ der geneigt angeformten Hülse 37' des Führungsrahmens 38', ist die Stirnfläche 47' in ihrem Abtriebsbereich 48' parallel zum Abtriebsrad 26' der Abtriebswelle 25' gerichtet. Auf der Hohlwelle 45' sind zwei hintereinanderliegende Gleitringe 49' vorgesehen, auf denen zwei Nadellager 50' sitzen, die zur Lagerung des Kegelrades 43' in der Hülse 37' dienen.

Das links liegende Reibrad 44' nimmt das von der Motorwelle 15' eingeleitete Drehmoment ab. Es ist an seiner Abtriebsfläche 51' mit einem Reibring 52' versehen, der auf einer sich am Wellenstumpf 46' anschliessenden Scheibe 53' mit Schrauben 54' befestigt ist.

Der Wellenstumpf 46' des Reibrades 44' ist mit einer konzentrischen Sacklochbohrung 55' versehen, die zur Aufnahme einer Kugel 56' und einer sich darauf abstützenden Druckfeder 57' bestimmt ist. Diese Druckfeder 57' stützt sich mit ihrem anderen Ende auf den Boden der Sacklochbohrung 60' der Hohlwelle 45' des Kegelrades 43' ab und ermöglicht eine begrenzte axiale Relativbewegung zwischen dem Reibrad 44' einerseits und dem Kegelrad 43' andererseits.

Die Stirnseite 58' des Wellenstumpfes 46' des Reibrades 44' besitzt eine Profilierung, die über eine drehfest mit dem Kegelrad 43' verbundene Profilhülse 59' das Kegelrad 43' mitnimmt.

In der Fig. 5 ist eine vergrösserte Darstellung des Kegelrades 43' mit seiner inneren Lagerung und der Profilhülse 59' gezeigt, wobei der Wellenstumpf 46' des Reibrades 44' nicht geschnitten dargestellt ist. Hier ist auch die Form der Profilierung deutlich erkennbar. Die Profilhülse 59' weist zwei gegenüberliegende V-förmige, im Scheitelbereich 68' abgerundete Kurvenstücke 67' auf, während an der Stirnseite 58' des Wellenstumpfes 46' zwei komplementäre, V-förmige Kurvenstücke 69' angeformt sind. Durch Aufeinandergleiten dieser V-förmigen Kurvenstücke 67', 69' kommt die erforderliche axiale Kraft für die Übertragung der Drehbewegung zwischen dem Reibrad 44' und dem Kegelrad 43' zustande, so dass stets am Abtriebsbereich 48' der Planscheibe 16' einerseits und an der Abtriebsfläche 51' des Abtriebsrades andererseits ein konstanter Reibdruck gewährleistet ist.

Zur Erzielung einer drehfesten Verbindung zwischen dem Kegelrad 43' und der Profilhülse 59' ist diese im Endbereich der Sacklochbohrung 60' der Hohlwelle 45' eingepresst. Die Sacklochbohrung 60' ist mehrfach gestuft. In ihrem bodenseitigen Endbereich 63' weist sie einen Abschnitt mit dem geringsten Durchmesser auf. Dieser Abschnitt 63' dient, wie bereits beschrieben, zur Aufnahme der Profilhülse 59'. In dem sich daran anschliessenden Mittelabschnitt 64' liegt der Übertragungsbereich der durch die stirnseitige Profilierung am Wellenstumpf 46' und der Profilhülse 59' gebildet wird. Dieser Abschnitt 64' ist gegenüber dem sich daran anschliessenden, den grössten Durchmesser aufweisenden Restabschnitt 65' durch einen Dichtungsring 66', z.B. O-Ring, abgedichtet. Der Dichtring 66' liegt hierbei an der radialen Anlagefläche 70' an, die durch die unterschiedlichen Durchmesser vom Mittelabschnitt 64' und Restabschnitt 65' gebildet wird. Dadurch ist gewährleistet, dass im Übertragungsbereich stets ausreichend Schmiermittel zur Verfügung steht. Die V-förmigen Kurvenstücke 67', 69' des Wellenstumpfes 46' und der Profilhülse 59' sind somit gegen einen frühzeitigen Verschleiss oder Korrosion geschützt. Der Restabschnitt 65' dient zur Aufnahme des Wellenstumpfes 46', der in zwei hintereinander angeordneten Nadellagern 61' drehgelagert ist. Zur Vermeidung von Schmiermittelaustritt ist dieser Restabschnitt 65' durch einen auf dem Wellenstumpf 46' sitzenden Dichtring 62' verschlossen.

Der Kraftfluss bei der Drehmomentübertragung ist zusammenhängend anhand der Fig. 4 erkennbar:

Das vom Motor 12' eingeleitete Drehmoment gelangt über die Motorwelle 15' auf das Planrad 16'. Hier wird es über das Reibrad 44' abgegriffen, wobei die vertikale Stellung des Reibrades 44' das Übersetzungsverhältnis bestimmt. Über die endseitigen V-Kurven des am Reibrad 44' angeschlossenen Wellenstumpfes 46' wird die Profilhülse 59' mitgenommen. Da diese drehfest am Kegelrad 43' angebracht ist, kann das Drehmoment von der Stirnfläche 47' des Kegelrades 43' auf das Abtriebsrad 26' gelangen. Das Abtriebsrad 26' ist drehfest mit der Abtriebswelle verbunden, die das Drehmoment dem Verbraucher zuleitet.

Wie bereits erwähnt, ist auf der Zeichnung lediglich ein Ausführungsbeispiel der Erfindung dargestellt und dieses ist keinesfalls darauf beschränkt. So wäre es denkbar, anstelle des dargestellten Dichtungsringes 66' einen Dichtring zu wählen, der einen anderen Querschnitt aufweist. Es würde auch die Erfindung nicht beeinträchtigen, wenn die drehfeste Verbindung zwischen Profilhülse 59' und Kegelscheibe 43' aus einer Stift- oder Schraubenverbindung gebildet würde oder die Profilhülse 56' eine umfängliche Kerbverzahnung aufweisen würde. Es wäre auch möglich, die Kegel-Reibrad-Kombination dahingehend abzuändern, dass das links liegende Reibrad 44' die Hohlwelle tragen würde, während das rechts liegende Kegelrad 43' mit dem Wellenstumpf ausgestattet wäre.

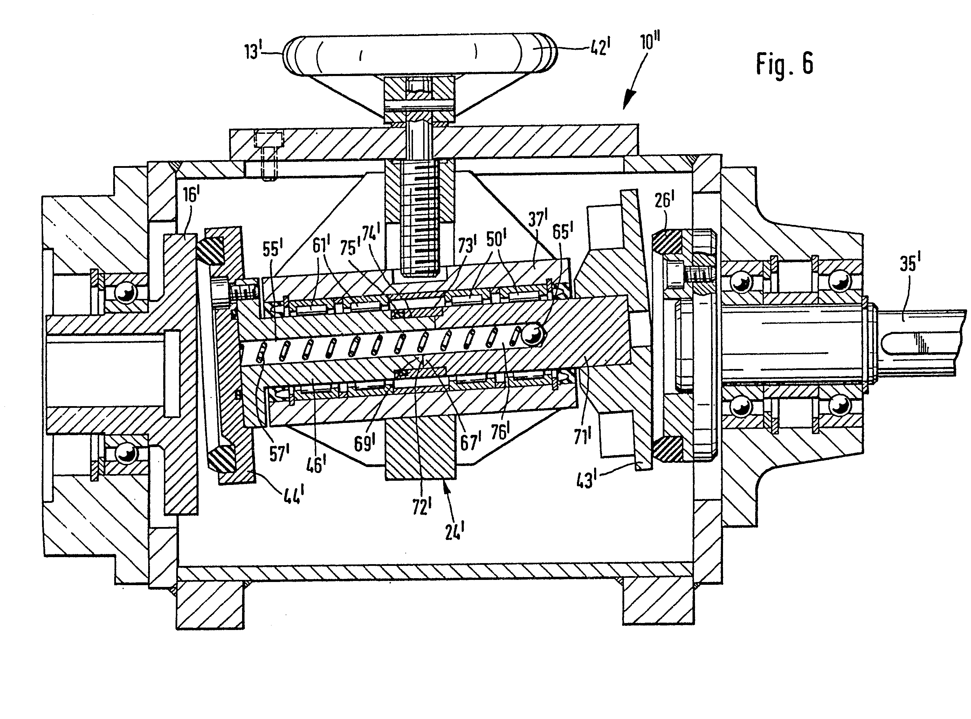

Die erwähnte Bohrung 55' im Zentrum des Wellenstücks 46' dient als Fettraum zur Aufnahme des Schmiermittels, damit es von innen her besser zu den V-Kurvenstücken 67', 69' zugeführt werden kann. Durch Verlängerung dieser axialen Bohrung 55' lässt sich der Fettraum entsprechend vergrössern. Hierzu kann auch folgende bauliche Alternative zweckdienlich sein, die in Fig. 6 näher gezeigt ist:

In Fig. 6 ist ein Reibradgetriebe 10″ mit zwei Friktionsstellen 16', 44' und 43', 16' gezeigt, wie sie schon im Zusammenhang mit dem vorausgehenden Ausführungsbeispiel von Fig. 4 und 5 verwendet wurden, weshalb zur Bezeichnung analoger Teile die gleichen Bezugszeichen wie in Fig. 4 und 5 verwendet werden. Insoweit gilt die bisherige Beschreibung. Es genügt daher, in Fig. 6 nur auf die Unterschiede einzugehen.

In Fig. 6 ist sowohl das Reibrad 44' als auch das Kegelrad 43' mit je einem Wellenstumpf 46' bzw. 71' versehen, die in der Mitte der Kombination 24' im Stumpfstoss aufeinander treffen und dort die V-Kurven- und -Gegenkurvenstücke 69' bzw. 67' aufweisen. Davon ist in Fig. 6 lediglich der dazwischen liegende Spalt 72' zu erkennen. Die beiden Wellenstümpfe 46', 71' sind über Nadellager 50', 61' in der vom Handrad 42' der Verstelleinrichtung 13' beweglichen Hülse 37' der Kombination 24' aufgenommen.

An den einander zugekehrten Endbereichen sind die Wellenstümpfe 46', 71' mit einem Absatz versehen, worin als Dichtungsglied eine Dichtungshülse 73' eingelegt ist, die mit ihrem einen Ende am Wellenstumpf 71' durch Kleben oder Aufschrumpfen festgelegt ist, aber auf dem endseitigen Absatz des anderen Wellenstumpfes 46' beweglich abgestützt ist. Die Innenfläche dieser Dichtungshülse 73' ist gegenüber der Absatzfläche 74' des Wellenstumpfes 46' durch einen innenseitigen Dichtring 75' abgedichtet. Damit ist auch in diesem Ausführungsbeispiel der Innenbereich mit den beiden Kurvenstücken 69', 67' gegenüber den Drehlagerungen 50', 61' abgeschlossen.

Im vorliegenden Fall besitzt nicht nur der zum Reibrad 44' gehörende Wellenstumpf 46' eine axiale Bohrung 55', sondern auch der zum Kegelrad 43' gehörende Wellenstumpf 71' ist mit einer Axialbohrung 76' versehen. Die Axialbohrungen 55', 76' fluchten miteinander und nehmen eine Druckfeder 57' und eine Kugel 56' auf, welche bestrebt sind, die beiden Wellenstümpfe 46', 71' axial auseinander zu drücken und daher, unabhängig von der angeschlossenen Drehlast, einen Ausgangsandruck an den beiden Friktionsstellen 16', 44' einerseits und 43', 26' zu erzeugen. Die übereinstimmenden Axialbohrungen 55', 76' dienen als Aufnahmeraum für das Schmiermittel, welches die lastabhängig zueinander drehbeweglichen Kurvenstücke 69', 67' fettet.

Bezugszeichenliste:

10 Reibradgetriebe
11 Motor
12 Verstellflansch
13 Gehäuse
14 Verstelleinrichtung
15 Motorwelle
16 Hülse von 12
17 Wälzlager
18 Sicherungsring
19 Kupplungszapfen
20 treibendes Rad, Kegelrad
21 Passfeder
22 Stirnfläche
23 Kragen
24 Rippen
25 Nabe
26 Reibrad
27 Abtriebswelle
28 Achse
29 Achse
30 Berührungsbereich
31 Befestigungsplatte
32 Skalenring
33 Zeiger
34 Handrad
35 Transportspindel
36 Führung
37 Kasten
38 Deckel
39 Führungsoberseite
40 Schraube
41 Innenraum
42 Lagerrohr, zylindrischer Ansatz
43 Aussenbereich, Lagerbohrung
44 Laufring
45 Tellerscheibe
46 Bund
47 Welleneingangsteil der Übertragungswelle, Hohlwelle
48 Schraube
49 Stirnrad
50 Messgenerator
51 Zahnrad
52 Platte
53 freies Ende von 42
54 Wälzlager
55 Distanzhülse
56 Sicherungsring
57 Wellendichtung
58 Stirnende
59 V-Kurvenstück
60 Wellenausgangsteil der Übertragungswelle, Profilbuchse
61 Passfeder
62 Innenbereich
63 V-Gegenkurvenstück von 60
64 Dichtungsglied, Dichtungshülse
65 Dichtring

66 Gewindestift
67 Vertiefung
68 Abflachung
69 Nadellager
70 Kugellager
72 Kupplungszapfen
73 Passfeder
74 Anschlagbolzen
75 Gewindezapfen
76 Bund
77 zylindrischer Teil
78 Innensechskant
79 Gewindebohrung
80 Innenbohrung
81 Sicherungsring
82 Scheibe
83 Druckfeder

10' Reibradgetriebe
11' Gehäuse
12' Antriebsmotor
13' Verstelleinrichtung
14' Oberseite
15' Motorwelle
16' angetriebenes Rad, Planrad
17' Passfeder
18' zylindrischer Ansatz
19' Wälzlager
20' Hülse
21' Flansch
22' Sicherungsring
23' Stirnfläche von 16
24' Kegel-Reibrad-Kombination
25' Abtriebswelle
26' Reibrad, Antriebsrad
27' Wälzlager
28' Lagerbohrung
29' Sicherungsring
30' Achse von 15
31' Achse von 25
32' Reibbelag
33' Scheibenflansch
34' Schraube
35' Kupplungszapfen
36' Passfeder
37' Hülse
38' Führungsrahmen
39' Steg
40' Gewindebohrung
41' Transportspindel
42' Handrad
43' Kegelrad
44' Reibrad
45' Hohlwelle
46' Welleneingangsteil der Übertragungswelle, Wellenstumpf
47' Stirnfläche
48' Abtriebsbereich
49' Gleithülse
50' Nadellager
51' Abtriebsfläche
52' Reibring
53' Scheibenflansch
54' Schraube
55' Bohrung

56' Kugel
57' Druckfeder
58' Stirnseite von 46
59' Wellenausgangsteil der Übertragungswelle, Profilhülse
60' Aussenbereich, Sackloch
61' Nadellager
62' Wellendichtung
63' Endabschnitt
64' Innenbereich
65' Restabschnitt
66' Dichtungsglied, Dichtring
67' V-Gegenkurvenstück
68' Scheitelbereich
69' V-Kurvenstück
70' radiale Anlagefläche
71' Wellenstumpf
72' Spalt
73' Dichtungshülse
74' Absatzfläche
75' Dichtring
76' Axialbohrung

**Patentansprüche**

1. Reibradgetriebe (10; 10') mit wenigstens einer Friktionsstelle, umfassend ein angetriebenes Rad, wie ein Plan- oder Kegelrad (16'; 20, 43'), und ein axial dagegen kraftbelastetes Reibrad (26; 44', 26') mit einer zweiteiligen Übertragungswelle (47, 60; 46', 59') für das einer Antriebswelle (27, 25') zuzuführende Drehmoment, wobei die Übertragungswelle aus einem Welleneingangsteil (47; 46') mit stirnendigen (58; 58') V-Kurvenstücken (59; 69') und aus einem Wellenausgangsteil (60; 59') mit darin eingreifenden stirnseitigen V-Gegenkurvenstücken (63; 67') besteht, die Drehlagerstellen (54, 55, 56; 61') zwischen dem Welleneingangsteil und dem Wellenausgangsteil der Übertragungswelle (47, 60; 46', 59') radial ausserhalb der V-Kurven- und -Gegenkurvenstücken (59, 63; 69', 67') angeordnet sind, wobei Welleneingangsteil und Ausgangsteil an der Übergangszone zwischen den V-Kurven- und -Gegenkurven hülsenartig von einem Bauteil (64, 65; 66'; 73', 75') abgedeckt sind und das eine Rad (20; 43', 44') zur Veränderung des Übertragungsverhältnisses radial gegenüber dem anderen Rad (26; 16', 26') verstellbar ist, dadurch gekennzeichnet, dass zwischen dem mit den V-Kurven- und -Gegenkurvenstücken (59, 63; 69', 67') ausgerüsteten Innenbereich (62; 64') der Übertragungswelle (47, 60; 46', 59') einerseits und den Drehlagerstellen (54, 55, 56; 61'; 50, 61') der Übertragungswelle (47, 60; 46', 59') andererseits Dichtungsglieder (64, 65; 66'; 73', 75') angeordnet sind, die einen Axialraum (55', 67') in der Übertragungswelle (46', 59') abschliessen, der gegenüber den V-Kurven- und -Gegenkurvenstücken (69', 67') radial nach innen gesetzt ist und als zentraler Speicher für Schmiermittel dient.

2. Reibradgetriebe nach Anspruch 1, dadurch gekennzeichnet, dass die Wellen Eingangs- und Ausgangsteile (47, 60) der Übertragungswelle in einem Lagerrohr (42) stecken und ihre die V-Kurven- und -Gegenkurvenstücke (59, 63) aufweisende Übergangszone von einer als Dichtungsglied dienenden Hülse (64) überdeckt ist.

3. Reibradgetriebe nach Anspruch 2, dadurch gekennzeichnet, dass die Hülse (64) wenigstens einendig mit einen Dichtungsring (65) aufnehmenden Innennuten versehen ist.

4. Reibradgetriebe nach Anspruch 2 oder 3, dadurch gekennzeichnet, dass die Hülse (64) mit dem einen Teil der Übertragungswelle, wie dem Wellenausgangsteil (60), drehfest verbunden ist.

5. Reibradgetriebe nach Anspruch 4, dadurch gekennzeichnet, dass die drehfeste Verbindung durch mindestens einen, die Wandung der Hülse (64) durchdringenden Gewindestift (66) erfolgt, der in eine durch eine radiale Abflachung (68) gebildete Vertiefung (67) des Übertragungswellen-Teils (60) eingreift.

6. Reibradgetriebe nach Anspruch 1, dadurch gekennzeichnet, dass die V-Kurven- und -Gegenkurvenstücke (69', 67') der Übertragungswelle im Endabschnitt (63') des Sacklochs (60') einer Hohlwelle (45') angeordnet sind und dieser Sacklochbodenbereich (63') gegenüber dem Drehlager (51') aufnehmenden Restabschnitt der Hohlwelle (45') durch eine den einen Teil der Übertragungswelle, wie den Welleneingangsteil (46'), ringförmig umschliessenden O-Ring (66') abgedichtet ist, der das schmiermittelundurchlässige Dichtungsglied bildet.

7. Reibradgetriebe nach Anspruch 6, dadurch gekennzeichnet, dass die Übertragungswelle (46', 59') und die sie aufnehmende Hohlwelle (45') Bestandteile einer doppelten Reibradgetriebe-Kombination (24') sind, die an beiden Enden je eine Friktionsstelle (16', 44'; 43', 26') aufweist und zur Veränderung des Übertragungsverhältnisses gemeinsam quer zur Getriebeachse (31') verstellbar sind.

8. Reibradgetriebe nach Anspruch 6 oder 7, dadurch gekennzeichnet, dass das Sackloch (60') der Hohlwelle (45') abgestuft ausgebildet ist und eine in einer Radialebene angeordnete Anlagefläche (70') für den O-Ring (66') bildet.

9. Reibradgetriebe nach einem oder mehreren der Ansprüche 5 bis 7, dadurch gekennzeichnet, dass das Sackloch (60') axial abschnittsweise mehrfach radial abgestuft ist, bestehend aus einem Endabschnitt (63') zur Befestigung des als Profilhülse (59') ausgebildeten Wellenausgangsteils der Übertragungswelle, aus einem zur Schmiermittelaufnahme dienenden, durch den O-Ring (66') verschlossenen, axialen Mittelabschnitt (64') und aus einem als Lageraufnahme des Welleneingangsteils (46') der Übertragungswelle dienenden Restabschnitt (65').

## Claims

1. A friction gearing (10; 10') having at least one friction point, comprising a driven gear such as a crown or bevel gear (16'; 20, 43') and a friction gear (26; 44', 26') force-loaded axially thereagainst, including a two-part transmission shaft (47, 60; 46', 59') for a torque to be transmitted to a driven shaft (27, 25'), wherein the transmission shaft consists of a shaft input section (47; 46') with face-end (58; 58') V-shaped cam parts (59; 69') and of a shaft output section (60; 59') with face-end V-shaped cam counter-parts (63; 67') engaging therein, the pivot bearings (54, 55, 56; 61') are arranged between the shaft input section and the shaft output section of the transmission shaft (47, 60; 46', 59') radially beyond the V-shaped cam parts and counter-parts (59, 63; 69', 67'), wherein the shaft input section and output section are covered by a component part (64, 65; 66', 73', 75') like a sleeve in the transitional area between the V-shaped cam and counter-cams, and the one gear (20; 43', 44') is adjustable radially with respect to the other gear (26; 16', 26') for changing the transmission ratio, characterized in that the inner area (62; 64') of the transmission shaft (47, 60; 46', 59') and fitted with the V-shaped cam parts and counter-parts (59, 63; 69', 67'), on the one hand, and the pivot bearings (54, 55, 56; 61'; 50, 61') of the transmission shaft (47, 60; 46', 59'), on the other hand, have interposed therebetween sealing members (64, 65; 66', 73', 75') which seal an axial space (55', 67') in the transmission shaft (46', 59') placed inwardly radially with respect to the V-shaped cam parts and counter-parts (69', 67') and serving as a central storage for lubricant.

2. A friction gearing as claimed in the claim 1, characterized in that the shaft input and output sections (47, 60) of the transmission shaft are mounted in a bearing tube (42) and their transitional area having the V-shaped cam parts and counter-parts (59, 63) is covered by a sleeve (64) serving as a sealing member.

3. A friction gearing as claimed in the claim 2, characterized in that the sleeve (64) is provided at least at one end with inner grooves receiving a gasket (65).

4. A friction gearing as claimed in the claim 2 or 3, characterized in that the sleeve (64) is non-rotatingly connected with one part of the transmission shaft, such as the shaft output section (60).

5. A friction gearing as claimed in the claim 4, characterized in that the non-rotating connection is effected by at least one grub screw (66) passing through the walls of the sleeve (64) and which engages in a recess (67) of the transmission shaft section (60), formed by a radially flattened portion (68).

6. A friction gearing as claimed in the claim 1, characterized in that the V-shaped cam parts and cam counter-parts (69', 67') of the transmission shaft are arranged in the end portion (63') of the blind hole (60') of a hollow shaft (45') and this blind hole bottom area (63') is sealed with respect to the remaining portion of the hollow shaft (45') accommodating the pivot bearing (51') by an O-ring (66') annularly enclosing one section of the transmission shaft such as the shaft input section (46'), and which constitutes the sealing member impermeable to lubricant.

7. A friction gearing as claimed in the claim 6, characterized in that the transmission shaft (46′, 59′) and the hollow shaft (45′) receiving the former are component parts of a double friction gearing combination (24′) which has one friction point each (16′, 44′; 43′, 26′) at both ends and which are commonly adjustable transversely to the gear axis (31′) for changing the transmission ratio.

8. A friction gearing as claimed in the claim 6 or 7, characterized in that the blind hole (60′) of the hollow shaft (45′) is stepped and constitutes a contact surface (70′) for the O-ring (66′) in a radial plane.

9. A friction gearing as claimed in any one or several of the claims 5 to 7, characterized in that the blind hole (60) has axial sections thereof radially stepped repeatedly, consisting of an end portion (63′) for mounting the shaft output section of the transmission shaft, designed as profiled sleeve (59′), an axial central portion (64′) serving to receive the lubricant and sealed by the O-ring (66′), and a remaining portion (65′) serving as bearing space of the shaft input section (46′) of the transmission shaft.

**Revendications**

1. Variateur de vitesse à roue de friction (10; 10′) comportant au moins un emplacement de friction qui comporte une roue entraînée telle qu'une roue plate ou conique (16′; 20, 43′) et une roue de friction (26; 44′, 26′) appliquée axialement contre celle-ci sous l'influence d'un effort et associée à un arbre en deux parties (47, 60; 46′, 59′) de transmission du couple à appliquer sur un arbre de sortie (27, 25′), cet arbre de transmission étant constitué d'un tronçon d'entrée (47; 46′) présentant, du côté de sa face de bout (58; 58′), des parties-cames en V (59; 69′) et d'un tronçon de sortie (60; 59′) comportant, du côté de sa face de bout, des parties-contre-cames en V (63; 67′) engrenant avec les parties-cames, tandis que les appuis en rotation (54, 55, 56; 61′) prévus entre le tronçon d'entrée et le tronçon de sortie de l'arbre de transmission (47, 60; 46′, 59′) sont disposés extérieurement, dans le sens radial, par rapport aux parties-cames et parties-contre-cames en V (59, 63; 69′, 67′) et que le tronçon d'entrée et le tronçon de sortie sont recouverts à la façon d'une douille par une pièce (64, 65; 66′; 73′, 75′) dans la zone de transition entre les cames et contre-cames en V, l'une (20; 43′, 44′) des roues étant réglable radialement en position par rapport à l'autre roue (26; 16′, 26′) en vue de faire varier le rapport de réduction, caractérisé en ce que des organes d'étanchéité (64, 65; 66′; 73′, 75′) sont disposés entre la zone intérieure (62; 64′) de l'arbre de transmission (47, 60; 46′, 59′) qui présente les parties-cames et parties-contre-cames en V (59, 63; 69′, 67′) d'une part et les appuis en rotation (54, 55, 56; 61′; 50, 61′) de l'arbre de transmission (47, 60; 46′, 59′) d'autre part, ces organes d'étanchéité isolant, dans l'arbre de transmission (46′, 59′), une cavité axiale (55′, 67′) qui est décalée radialement vers l'intérieur par rapport aux parties-cames et parties-contre-cames en V (69′, 67′) et sert de réservoir central de lubrifiant.

2. Variateur de vitesse à roue de friction selon la revendication 1, caractérisé en ce que les tronçons d'entrée et de sortie (47, 60) de l'arbre de transmission sont emboîtés dans un tube de palier (42) et en ce que leur zone de transition qui comporte les parties-cames et parties-contre-cames en V (59, 63) est recouverte par un manchon (64) servant d'organe d'étanchéité.

3. Variateur de vitesse à roue de friction selon la revendication 2, caractérisé en ce que le manchon (64) est muni, à au moins une extrémité, d'une gorge intérieure dans laquelle est logée une bague d'étanchéité (65).

4. Variateur de vitesse à roue de friction selon la revendication 2 ou 3, caractérisé en ce que le manchon (64) est solidaire en rotation de l'un des tronçons de l'arbre de transmission, par exemple du tronçon de sortie (60) de cet arbre.

5. Variateur de vitesse à roue de friction selon la revendication 4, caractérisé en ce que la solidarisation en rotation s'obtient à l'aide d'au moins une vis sans tête (66) qui traverse la paroi du manchon (64) et mord dans un évidement (67), formé par un méplat radial (68), du tronçon d'arbre de transmission (60).

6. Variateur de vitesse à roue de friction selon la revendication 1, caractérisé en ce que les parties-cames et parties-contre-cames en V (69′, 67′) de l'arbre de transmission sont disposées dans la section extrême (63′) du trou borgne (60′) d'un arbre creux (45′) et en ce que l'étanchéité de cette zone de fond (63′) du trou borgne, par rapport à la section restante de l'arbre creux (45′) dans laquelle est logé le palier de rotation (51′), est assurée par un joint torique (66′) qui entoure de manière annulaire l'un des tronçons de l'arbre de transmission, par exemple le tronçon d'entrée (46′) de cet arbre, et qui constitue l'organe d'étanchéité qui est étanche au lubrifiant.

7. Variateur de vitesse à roue de friction selon la revendication 6, caractérisé en ce que l'arbre de transmission (46′, 59′) et l'arbre creux (45′) dans lequel il est logé sont des éléments constitutifs d'un double ensemble combiné de variateur de vitesse à roue de friction (24′), qui comportent chacun à leurs deux extrémités un emplacement de friction (16′, 44′; 43′, 26′), et qui sont réglables en commun en position transversalement à l'axe (31′) du variateur de vitesse en vue de faire varier le rapport de transmission.

8. Variateur de vitesse à roue de friction selon la revendication 6 ou 7, caractérisé en ce que le trou borgne (60′) de l'arbre creux (45′) est étagé et forme, pour le joint torique (66′), une surface d'appui (70′) qui est disposée dans un plan radial.

9. Variateur de vitesse à roue de friction selon l'une ou plusieurs des revendications 5 à 7, caractérisé en ce que le trou borgne (60′) est plusieurs fois étagé radialement en formant, dans le sens axial, des sections constituées d'une section extrême (63') permettant la fixation du tronçon de sortie de l'arbre de transmission, ce tronçon étant réalisé sous forme d'une douille profilée (59'), d'une section médiane dans le sens axial (64') obturée par le joint torique (66') et servant de logement de lubrifiant et d'une section restante (65') servant de logement de palier pour le tronçon d'entrée (46') de l'arbre de transmission.

Fig. 1

0 111 094

Fig. 2

Fig. 3

13

Fig. 4

Fig. 5

Fig. 6

13' 42' 10'' 16' 26' 55' 61' 75' 74' 73' 50' 37' 65' 35' 57' 46' 69' 72' 67' 76' 71' 43' 24' 44'

0 111 094

17